# EUROPÄISCHE PATENTSCHRIFT

(11) **EP 1 063 339 B1**
(45) Veröffentlichungstag und Bekanntmachung des Hinweises auf die Patenterteilung: **04.02.2004**
(21) Anmeldenummer: 00111175.6
(22) Anmeldetag: 24.05.2000
(51) Int. Cl.: D06F 39/00, G01N 13/02

(54) **Waschmaschine mit einem System zur Bestimmung der Oberflächenspannung**
Washing machine with a system for determining the surface tension
Machine à laver avec un système pour déterminer la tension de surface

(30) Priorität: 22.06.1999 DE 19928391; 22.06.1999 DE 19928393
(43) Veröffentlichungstag der Anmeldung: 27.12.2000
(73) Patentinhaber: Miele & Cie. KG, 33332 Gütersloh (DE)
(72) Erfinder: Bicker, Rainer, 32791 Lage (DE); Dietz, Walter, 33332 Gütersloh (DE); Herden, Rudolf, 33442 Herzebrock (DE)

(56) Entgegenhaltungen:
- EP-A- 0 885 993
- DE-A- 4 112 417
- DE-A- 19 529 787
- DE-C- 19 755 291

## Beschreibung

Die Erfindung betrifft eine Waschmaschine mit einem System zur Bestimmung der Oberflächenspannung von Wasch- oder Spülflüssigkeit aus dem Laugenbehälter einer Waschmaschine nach der Blasendruckmethode, wobei mittels einer Vorrichtung zur Erzeugung eines gasförmigen Volumenstroms in die Flüssigkeit ein gasförmiger Volumenstrom über eine Kapillare eingeleitet und während des Blasenabrisses der zeitliche Verlauf des Drucks dieses Volumenstroms betrachtet wird.

Es besteht seit langem der Wunsch, die im gewerblichen Bereich und in Haushaltswaschmaschinen angewandten Waschverfahren hinsichtlich ihres Waschmittelverbrauchs unter Berücksichtigung ökologischer und ökonomischer Gesichtspunkte zu optimieren. Um diese Ziele zu erreichen, sind Dosierverfahren notwendig, welche für den jeweiligen Waschprozess eine optimale Waschmittelkonzentration gewährleisten, die einerseits ein zufriedenstellendes Waschergebnis sichert und andererseits eine Überdosierung ausschließt. Aus der DE 41 12 417 A1 und aus der DE 195 29 787 A1 ist es bekannt, die Waschmittelkonzentration in einem Waschmittel-Wassergemisch (Waschflüssigkeit) durch eine Messung der Oberflächenspannung zu ermitteln. Ebenso ist es möglich, die Spülwirkung einer Waschmaschine durch Bestimmung der Oberflächenspannung der Spülflüssigkeit zu bestimmen. Dabei kann die Bestimmung in beiden Fällen mit einem Blasentensiometer erfolgen, wie in den vorgenannten Fundstellen vorgeschlagen.

Die Bestimmung der dynamischen Oberflächenspannung nach der Blasendruckmethode basiert auf der Abhängigkeit der Oberflächenspannung vom Druck bei der Bildung freier Oberflächen. Dabei wird durch eine Kapillare ein Luftstrom in die Messflüssigkeit eingeleitet und erzeugt Blasen. Die Druckdifferenz des Luftstroms während des Blasenabrisses ist dann proportional zur Oberflächenspannung. Bei der Messflüssigkeit handelt es sich um eine Probe der Wasch- oder Spülflüssigkeit aus dem Laugenbehälter der Waschmaschine.

Auf dem Markt erhältliche Blasentensiometer sind sehr teuer und können deshalb in Haushaltswaschmaschinen nicht serienmäßig eingesetzt werden.

Der Erfindung stellt sich somit das Problem, eine Waschmaschine der eingangs beschriebenen Art zu offenbaren, bei der die Bestimmung der Oberflächenspannung kostengünstig erreicht werden kann.

Erfindungsgemäß wird dieses Problem durch eine Waschmaschine mit den im Patentanspruch 1 angegebenen Merkmalen gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich durch die Ausnutzung eines bereits vorhandenen Sensors und seiner Messelektronik. Zur Realisierung eines kostengünstigen Oberflächenspannungs-Bestimmungssystems ist deshalb nur noch der Einbau einer Pumpeinrichtung zur Erzeugung eines gasförmigen Volumenstroms (Luftstrom) und evtl. eine Vorrichtung zur Entnahme einer Messprobe der Wasch- bzw. Spülflüssigkeit notwendig.

Durch eine Waschmaschine mit den Merkmalen des Anspruchs 6 ist eine solche Vorrichtung offenbart. Mit dieser sind folgende Vorteile auf einfache Weise erreichbar:
- In Wassereinläufen ohne Waschmitteleinspülung (Spülgänge, Wassereinläufe mit teilweiser Umgehung der Waschmitteleinspülfächer) ist ein Kalibrieren des Sensors möglich, ohne dass eine zusätzliche Kalibrier-Messzelle vorhanden sein muss;
- die Messzelle wird in jedem Waschprogramm durch die Frischwasserzufuhr in den Spülgängen gereinigt, hierdurch werden Messfehler durch Waschmittelablagerungen vermieden;
- die Messzelle kann auf einfache Weise durch unwuchtbedingte Schwingungen des Laugenbehälters geleert werden.

In einer vorteilhaften Ausführungsform sind an der Trommel zur Laugenbehälterwand gerichtete Schöpfeinrichtungen angeordnet, welche während der Drehung der Trommel Flüssigkeit aus dem unteren Bereich des Laugenbehälters in die Kammer fördern. Hierdurch erübrigt sich eine zusätzliche Pumpe zur Füllung der Kammer mit der zu überprüfenden Waschlauge. Durch die ständige Drehung der Trommel während des Waschvorgangs wird die Messzelle stets bis zum Rand gefüllt, so dass eine definierte Eintauchtiefe der Kapillare gesichert ist.

Ein Ausführungsbeispiel der Erfindung ist in den Zeichnungen rein schematisch dargestellt und wird nachfolgend näher beschrieben. Es zeigt
- Figur 1: den prinzipiellen Aufbau einer erfindungsgemäß ausgebildeten Trommelwaschmaschine anhand einer Schemaskizze.
- Figur 2: einen Ausschnitt aus dem Laugenbehälter einer erfindungsgemäß ausgebildeten Trommelwaschmaschine mit einer Messzelle im Bereich der Laugenbehälterwand

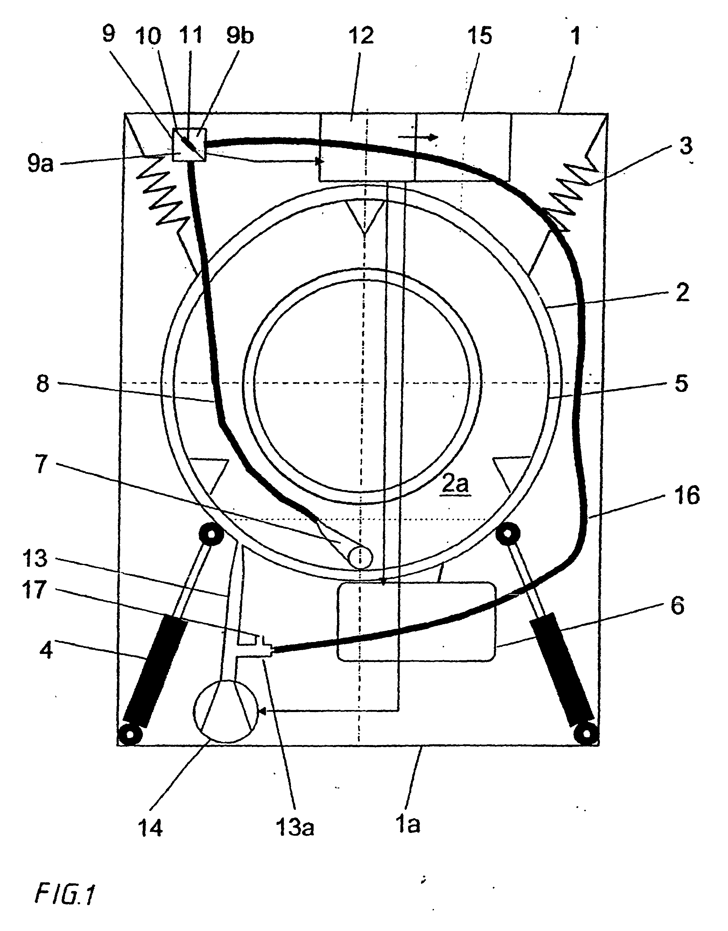

Die in Figur 1 dargestellte Waschmaschine besitzt ein Gehäuse (1), in dem ein Laugenbehälter (2) an Federn (3) schwingend aufgehängt ist. Zur Dämpfung der Schwingungen ist er gegenüber dem Gehäuseboden (1a) durch Schwingungsdämpfer (4) abgestützt. Innerhalb des Laugenbehälters (2) ist in bekannter Weise eine Trommel (5) zur Aufnahme von Wäsche drehbar gelagert und wird durch einen Motor (6) angetrieben.

Zur Messung des Flüssigkeitsniveaus im Laugenbehälter (2) ist an dessen Vorderwand (2a) im unteren Bereich ein Druckstutzen (7) angeordnet, von dem ein erster Verbindungsschlauch (8) zu einem Drucksensor (9) geführt ist. Der Drucksensor (9) ist als analoger Differenzdrucksensor ausgebildet, wobei die beiden Seiten durch eine Membran (10) getrennt sind, auf der der Messwertumformer (11) angeordnet ist. Der Messwertumformer (11) wandelt die druckbedingten Auslenkungen der Membran (10) in Spannungssignale um. Diese werden dann zur Auswertung an eine Mikroprozessor-Steuerung (12) weitergeleitet und zur Bestimmung des Flüssigkeitsniveaus im Laugenbehälter (2) verwendet. Bei herkömmlichen Waschmaschinen ist der Drucksensor (9) dazu konzipiert, auf der einen Seite (9a) den füllstandsabhängigen Druck im Laugenbehälter (2) und auf der anderen Seite (9b) den atmosphärischen Druck zu messen.

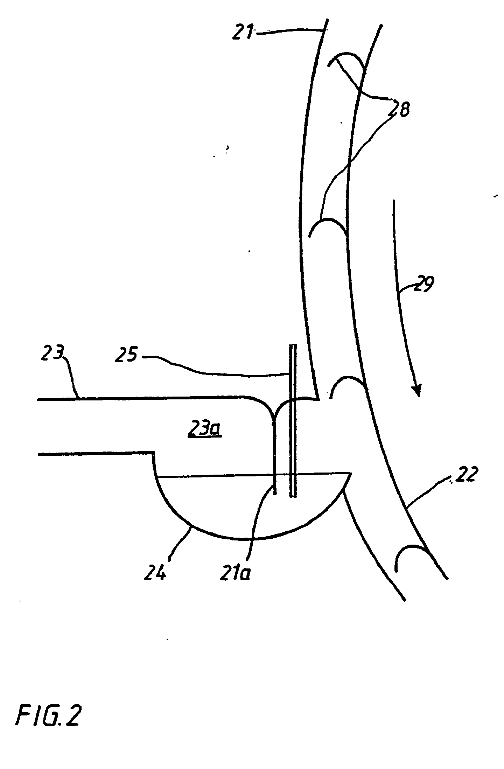

Die erfindungsgemäß ausgebildete Waschmaschine besitzt außerdem eine Einrichtung zur Messung der Oberflächenspannung der Wasch- oder Spülflüssigkeit nach der Blasendruckmethode. Zu diesem Zweck wird in den Laugenbehälter (2) oder in eine mit der Waschflüssigkeit gefüllte Messzelle (s. Figur 2) über eine Kapillare (13) ein Luftstrom eingeleitet, der von einer Luftpumpe (14) erzeugt wird. Dieser Luftstrom verursacht in der Flüssigkeit eine Bildung von Luftblasen. Eine nachgeschaltete Drossel (nicht dargestellt) hält den Luftstrom konstant. Der an der Kapillaren (13) anliegende Druck wird während der Blasenabrisse erfasst und von einer in der Mikroprozessor-Steuerung integrierten Auswerteschaltung (15) in Oberflächenspannungs-Werte umgerechnet. Zu diesem Zweck ist ein Abzweig (13a) von der Leitung zur Kapillaren über einen zweiten Verbindungsschlauch (16) mit der Atmosphärenseite (9b) des Drucksensors (9) verbunden. Auf diese Weise können beide Drucksignale (Füllstand im Laugenbehälter; Oberflächenspannung der Wasch-/Spülflüssigkeit) mit einem Sensor ermittelt werden, dennoch sind die Messsysteme voneinander getrennt. Eine definierte Öffnung (17) im Bereich des Luftweges zwischen der Luftpumpe und dem Drucksensor, hier im Abzweig (13a), sorgt dafür, dass nach dem Ausschalten der Pumpe (14) wieder Umgebungsdruck am Drucksensor (9) anliegt und das füllstandsabhängige Drucksignal nicht beeinflusst wird. Bei eingeschalteter Luftpumpe (14) wird die Oberflächenspannung ermittelt. Vorraussetzung dabei ist, dass der erzeugte Luftstrom kräftig genug ist, um die aus der Öffnung (17) ausströmende Luft auszugleichen und gleichzeitig Blasen zu erzeugen.

Um eine Beeinflussung von Füllstands- und Oberflächenspannungsmessung zu vermeiden und den dynamischen Anteil des Drucksignals bei der Ermittlung der Oberflächenspannung nicht durch Niveauschwankungen zu verfälschen, ist es vorteilhaft, die Trommel (5) während der Luftstromerzeugung stillzusetzen und einen Wasserzu- bzw. -ablauf zum Laugenbehälter (2) zu unterbinden.

Die in Figur 2 dargestellte Waschmaschine besitzt einen Laugenbehälter (21), dem durch einen ventilgesteuerten Wasserweg über einen nicht dargestellten Waschmitteleinspülkasten Wasser und Waschmittel zugeführt wird. Dabei erfolgt die Verbindung vom Waschmitteleinspülkasten zum Laugenbehälter (21) durch eine Schlauchleitung (23), die in die Wand (21 a) des Laugenbehälters (21) mündet. Um diesem Mündungsbereich (23a) ist an der Außenseite der Laugenbehälterwand (21a) eine schalenförmige Kammer (24) angeformt, die als Messzelle für eine Einrichtung zur Bestimmung der Oberflächenspannung dient. Dabei bilden die Kammer (24), die Wand (21a) und der Einmündungsbereich der Schlauchleitung ein Siphon. In die Kammer (24) wird über eine Kapillare (25) Luft eingeleitet. Der weitere Aufbau des Sensors zur Bestimmung der Oberflächenspannung mit seinen Vorrichtungen zur Erzeugung und Einleitung der Luft und zur Auswertung des Druckverlaufs während der Blasenabrisse an der Kapillaren (25) ist analog zu der Vorrichtung gemäß Figur 1 und deswegen nicht dargestellt. Um die Bestimmung der Oberflächenspannung in der Wasch- bzw. Spülflüssigkeit vornehmen zu können, muss diese aus dem Bodenbereich des Laugenbehälters (21) in die Messzelle gefördert werden. Hierzu sind am Mantel der Trommel (22) oder bei entsprechender Anordnung der Kammer (24) an einer ihrer Stirnflächen Schöpfeinrichtungen (28) angeformt, die in Drehrichtung (29) der Trommel (22) wirken. Durch diese wird die Kammer (24) während der Drehung der Trommel (22) mit der Messflüssigkeit gefüllt. Alternativ kann zur Füllung der Kammer (24) eine Pumpe (nicht dargestellt) verwendet werden, wobei der ersten Alternative aufgrund ihrer Kostengünstigkeit der Vorzug zu geben ist. Eine Entleerung der Kammer (24) erfolgt automatisch zum Ende eines Waschprogramms durch die beim Schleudern auftretenden Schwingungen, die sich aufgrund von Unwuchten durch ungleichmäßige Wäscheverteilung einstellen.

## Patentansprüche

1. Waschmaschine mit einem System zur Bestimmung der Oberflächenspannung von Wasch- oder Spülflüssigkeit aus dem Laugenbehälter (2; 21) einer Waschmaschine nach der Blasendruckmethode, wobei mittels einer Vorrichtung (14) zur Erzeugung eines gasförmigen Volumenstroms in die Flüssigkeit ein gasförmiger Volumenstrom über eine Kapillare eingeleitet und während des Blasenabrisses derzeitliche Verlauf des Drucks dieses Volumenstroms betrachtet wird,
**dadurch gekennzeichnet,**
**dass** zur Messung des Drucks des Volumenstromes die Vorrichtung (14) zur Erzeugung eines gasförmigen Volumenstroms über einen Luftweg (13a; 16) mit der Atmosphärenseite (9b) eines als Differenzdrucksensor ausgebildeten analogen Drucksensors (9) einer Niveaumesseinrichtung zur Bestimmung des Flüssigkeitsstandes im Laugenbehälter (2; 21) verbunden ist.

2. Waschmaschine nach Anspruch 1,
**dadurch gekennzeichnet,**
**dass** in dem Luftweg (13a; 16) zwischen der Atmosphärenseite (9b) des Drucksensors (9) und einer Vorrichtung (14), beispielweise einer Luftpumpe (14), zur Erzeugung des gasförmigen Volumenstromes eine Öffnung (17) angeordnet ist, deren Durchmesser hinsichtlich der Erzielung eines ausreichend verwertbaren Drucksignals angepasst ist, so dass nach dem Abschalten der Vorrichtung (14) zur Erzeugung eines gasförmigen Volumenstroms wieder Umgebungsluft am Drucksensor (9) anliegt.

3. Waschmaschine nach einem der Ansprüche 1 oder 2,
**gekennzeichnet durch** eine Auswerteschaltung (15) zur Auswertung des dynamischen Signalanteils des Drucksensors (9).

4. Waschmaschine nach Anspruch 3,
**dadurch gekennzeichnet,**
**dass** die Auswerteschaltung (15) das Drucksignal zu Zeiten auswertet, in denen kein Wasserzulauf zum Laugenbehälter (2; 21) oder Wasserablauf aus dem Laugenbehälter (2; 21) erfolgt.

5. Waschmaschine mit einer drehbaren Trommel (5; 22) oder einem Wäschebeweger innerhalb des Laugenbehälters (2; 21) nach mindestens einem der Ansprüche 3 oder 4,
**dadurch gekennzeichnet,**
**dass** die Auswerteschaltung (15) das Drucksignal zu Zeiten auswertet, in denen die Trommel (5; 22) oder der Wäschebeweger stillgesetzt sind.

6. Waschmaschine nach einem der Ansprüche 1 bis 5 mit einer drehbaren Trommel (5; 22), mit einem Wasserzulauf (23) und mit einer Messzelle, in die die Kapillare (25) mündet,
**dadurch gekennzeichnet,**
**dass** die Messzelle als Kammer (24) an der Wand des Laugenbehälters (21) ausgebildet ist und dort im Mündungsbereich (23a) des Wasserzulaufs (23) angeordnet ist.

7. Trommelwaschmaschine nach Anspruch 6,
**dadurch gekennzeichnet,**
**dass** an der Trommel (22) zur Wand des Laugenbehälters (21) gerichtete Schöpfeinrichtungen (28) angeordnet sind, welche während der Drehung der Trommel (22) Flüssigkeit aus dem unteren Bereich des Laugenbehälters (21) in die Kammer (24) fördern.

8. Trommelwaschmaschine nach Anspruch 6,
**gekennzeichnet durch** eine Pumpeinrichtung zur Befüllung der Kammer (24) mit Wasch- oder Spülflüssigkeit aus dem unteren Bereich des Laugenbehälters (21).

9. Trommelwaschmaschine nach mindestens einem der Ansprüche 6 bis 8,
**dadurch gekennzeichnet,**
**dass** die Kammer (24) zusammen mit Teilen (21a) der Laugenbehälterwand und / oder des Wasserzulaufs (23) einen Siphon bilden.

## Claims

1. Washing machine, having a system for determining the surface tension of washing or rinsing liquid from the washing liquid container (2; 21) of a washing machine according to the bubble pressure method, a gaseous volumetric flow being introduced into the liquid, via a capillary tube, by means of a device (14) for generating a gaseous volumetric flow, and the development of the pressure of this volumetric flow being considered with respect to time during bubble breakage, **characterised in that**, to measure the pressure of the volumetric flow, the device (14) for generating a gaseous volumetric flow is connected, via an airway (13a; 16), to the atmosphere side (9b) of an analog pressure sensor (9) of a level measuring means for determining the level of liquid in the washing liquid container (2; 21), said sensor being in the form of a differential pressure sensor.

2. Washing machine according to claim 1, **characterised in that** an opening (17) is provided in the airway (13a; 16) between the atmosphere side (9b) of the pressure sensor (9) and a device (14), for example an air pump (14), for generating the gaseous volumetric flow, the diameter of said opening being adapted to achieve a sufficiently utilisable pressure signal, so that ambient air is again applied to the pressure sensor (9) after the device (14) for generating a gaseous volumetric flow has been switched-off.

3. Washing machine according to one of claims 1 or 2, **characterised by** an evaluating circuit (15) for evaluating the dynamic signal portion of the pressure sensor (9).

4. Washing machine according to claim 3, **characterised in that** the evaluating circuit (15) evaluates the pressure signal at times when there is no supply of water to the washing liquid container (2; 21) or no discharge of water from the washing liquid container (2; 21).

5. Washing machine, having a rotatable drum (5; 22) or a laundry agitator internally of the washing liquid container (2; 21), according to at least one of claims 3 or 4, **characterised in that** the evaluating circuit (15) evaluates the pressure signal at times when the drum (5; 22) or the laundry agitator is stationary.

6. Washing machine according to one of claims 1 to 5, having a rotatable drum (5; 22), a water inlet (23) and a measuring chamber, into which the capillary tube (25) extends, **characterised in that** the measuring chamber is in the form of chamber (24) on the wall of the washing liquid container (21) and is disposed in the region of the mouth (23a) of the water inlet (23).

7. Drum-type washing machine according to claim 6, **characterised in that** draining means (28), which are oriented towards the wall of the washing liquid container (21), are disposed on the drum (22) and convey liquid from the lower region of the washing liquid container (21) to the chamber (24) during the rotation of the drum (22).

8. Drum-type washing machine according to claim 6, **characterised by** a pumping means for filling the chamber (24) with washing or rinsing liquid from the lower region of the washing liquid container (21).

9. Drum-type washing machine according to at least one of claims 6 to 8, **characterised in that** the chamber (24), together with parts (21a) of the washing liquid container wall and/or of the water inlet (23), form a siphon.

## Revendications

1. Machine à laver avec un système pour déterminer la tension de surface d'un liquide de lavage ou de rinçage à partir de la cuve de lavage (2 ; 21) d'une machine à laver selon la méthode de la pression de bulle, système selon lequel, au moyen d'un dispositif (14) destiné à produire un volume gazeux, on introduit un volume gazeux dans le liquide par l'intermédiaire d'un tube capillaire, et on observe l'évolution dans le temps de la pression de ce volume pendant l'éclatement de la bulle,
**caractérisée en ce que**, afin de mesurer la pression dudit volume, le dispositif (14) destiné à produire un volume gazeux est relié par l'intermédiaire d'un parcours d'air (13a ; 16) au côté atmosphère (9b) d'un capteur de pression analogique (9), réalisé sous forme de capteur de pression différentielle, d'un dispositif de mesure de niveau destiné à déterminer le niveau de liquide dans la cuve de lavage (2 ; 21).

2. Machine à laver selon la revendication 1, **caractérisée en ce qu'**une ouverture (17) est disposée dans le parcours d'air (13a; 16) entre le côté atmosphère (9b) du capteur de pression (9) et un dispositif (14), par exemple une pompe à air (14), destiné à produire le volume gazeux, ouverture dont le diamètre est adapté en vue d'obtenir un signal de pression suffisamment exploitable, de sorte qu'à la suite de la désactivation du dispositif (14) destiné à produire un volume gazeux, c'est à nouveau de l'air ambiant qui est appliqué au capteur de pression (9).

3. Machine à laver selon la revendication 1 ou 2, **caractérisée par** un montage évaluateur (15) pour évaluer la part de signal dynamique du capteur de pression (9).

4. Machine à laver selon la revendication 3, **caractérisée en ce que** le montage évaluateur (15) évalue le signal de pression à des moments où ne s'effectue pas d'apport d'eau à la cuve de lavage (2 ; 21) ou d'évacuation d'eau de la cuve de lavage (2 ; 21).

5. Machine à laver avec un tambour rotatif (5 ; 22) ou un agitateur de lessive à l'intérieur de la cuve de lavage (2 ; 21), selon au moins une des revendications 3 et 4, **caractérisée en ce que** le montage évaluateur (15) évalue le signal de pression à des moments où le tambour (5 ; 22) ou l'agitateur de lessive est immobilisé.

6. Machine à laver selon une des revendications 1 à 5, avec un tambour rotatif (5 ; 22), avec une arrivée d'eau (23) et avec une cellule de mesure dans laquelle débouche le tube capillaire (25), **caractérisée en ce que** la cellule de mesure est réalisée sous forme de chambre (24) sur la paroi de la cuve de lavage (21), et y est disposée dans la région d'embouchure (23a) de l'arrivée d'eau (23).

7. Machine à laver à tambour selon la revendication 6, **caractérisée en ce que** des moyens de puisage (28) sont disposés sur le tambour (22), moyens qui sont dirigés vers la paroi de la cuve de lavage (21) et qui, pendant la rotation du tambour (22), refoulent du liquide dans la chambre (24) à partir de la région inférieure de la cuve de lavage (21).

8. Machine à laver à tambour selon la revendication 6, **caractérisée par** un moyen de pompage pour remplir la chambre (24) de liquide de lavage ou de rinçage à partir de la région inférieure de la cuve de lavage (21).

9. Machine à laver à tambour selon au moins une des revendications 6 à 8, **caractérisée en ce que** la chambre (24) forme un siphon conjointement avec des parties (21a) de la paroi de la cuve de lavage et/ou de l'arrivée d'eau (23).
